# EUROPÄISCHE PATENTSCHRIFT

(11) **EP 4 094 986 B1**
(45) Veröffentlichungstag und Bekanntmachung des Hinweises auf die Patenterteilung: **06.05.2026**
(21) Anmeldenummer: 22185747.7
(22) Anmeldetag: 12.07.2021
(51) Int. Cl.: B60P 7/08, B60D 1/14, B60D 1/46, B60P 3/22

(54) **ANHÄNGER ZUR BEFÖRDERUNG VON FLÜSSIGKEITEN**
TRAILER FOR TRANSPORTING LIQUIDS
REMORQUE DESTINÉE AU TRANSPORT DES LIQUIDES

(30) Priorität: 21.09.2020 DE 202020105390 U
(43) Veröffentlichungstag der Anmeldung: 30.11.2022
(62) Teilanmeldung aus: 21185054.0
(73) Patentinhaber: Röhren- und Pumpenwerk Bauer Ges.m.b.H., 8570 Voitsberg (AT)
(72) Erfinder: ROISS, Otto, 8010 Graz (AT)
(74) Vertreter: Hoefer & Partner Patentanwälte mbB

(56) Entgegenhaltungen:
- US-B1- 6 923 475
- US-B1- 8 419 039
- GARANT KOTTE: "garant VT 19.100 mit Moorflitzer-Bereifung", 19 June 2020 (2020-06-19), XP055916665, Retrieved from the Internet <URL:https://www.youtube.com/watch?v=KU1NFUSQGAM> [retrieved on 20220429]
- GARANT KOTTE: "garant VT 20.000 mit garant SlurryDisc HD", 25 November 2014 (2014-11-25), XP055916680, Retrieved from the Internet <URL:https://www.youtube.com/watch?v=U0smiM3duJU> [retrieved on 20220429]

## Beschreibung

Vorliegende Erfindung betrifft einen Anhänger zur Beförderung von Flüssigkeiten. Der Anhänger wird insbesondere zum Befördern und Ausbringen von Wirtschaftsdünger und Klärschlamm verwendet.

Aus dem Stand der Technik sind unterschiedliche Anhänger zur Beförderung von Flüssigkeiten bekannt. Hier werden insbesondere Anhänger zur Beförderung von Wirtschaftsdünger, beispielsweise Gülle, oder Klärschlamm betrachtet. Insbesondere wird der Anhänger zum Ausbringen der Flüssigkeit auf ein Feld verwendet.

URL:https://www.youtube.com/watch?v=KU1NFUSQGAM [gefunden am 2022-04-29] zeigt einen Anhänger zum Ausbringen von Gülle der Firma Garant Kotte. Seitlich an dem Fass des Anhängers sind horizontale Leisten und mehrere Bügel zu sehen.

Es ist Aufgabe der Erfindung, einen Anhänger zur Beförderung von Flüssigkeiten anzugeben, der eine sichere Beförderung, insbesondere auch Ausbringung, der Flüssigkeit ermöglicht.

Die Lösung dieser Aufgabe erfolgt durch die Merkmale der unabhängigen Ansprüche. Die abhängigen Ansprüche haben vorteilhafte Ausgestaltungen der Erfindung zum Gegenstand.

Die Erfindung zeigt einen Anhänger zur Beförderung von Flüssigkeiten, insbesondere Gülle. Der Anhänger umfasst einen Tank. Der Tank weist eine vordere Stirnwand und eine hintere Stirnwand auf. Die beiden Stirnwände sind über eine Mantelfläche miteinander verbunden. Eine Längsachse des Anhängers, die insbesondere parallel zur Fahrtrichtung steht, erstreckt sich durch die beiden Stirnwände. Insbesondere ist vorgesehen, dass der Tank aus Stahl gefertigt ist. Alternativ kann der Tank auch aus Kunststoff, insbesondere faserverstärktem Kunststoff, gefertigt sein.

Vorzugsweise weist der Anhänger ein Fahrgestell auf. Des Weiteren ist vorzugsweise eine Anhängevorrichtung, insbesondere eine Zuggabel, vorgesehen. Über diese Anhängevorrichtung kann der Anhänger an einer Zugmaschine, insbesondere einem Traktor, befestigt werden. Des Weiteren ist bevorzugt vorgesehen, dass der Anhänger eine Vorrichtung zum Ausbringen der Flüssigkeit auf ein Feld aufweist; insbesondere mit einer Pumpe und einem Auslass im Bereich der hinteren Stirnseite.

Der Anhänger umfasst vorzugsweise eine Zuggabelaufnahme, die am Tank angeordnet ist, und eine an der Zuggabelaufnahme in unterschiedlichen Höhen befestigbare Zuggabel. Die Zuggabel ist zur Verbindung mit einer Zugmaschine, insbesondere einem Traktor, ausgebildet. Die Zuggabelaufnahme kann direkt am Tank, also beispielsweise an der Stirnwand und/oder Mantelfläche, befestigt sein. Alternativ oder zusätzlich kann die Zuggabelaufnahme auch indirekt am Tank befestigt sein: Der Tank kann beispielsweise auf einem oder mehreren Längsträgern aufliegen, wobei die Zuggabelaufnahme an dem zumindest einen Längsträger befestigt ist.

Die Zuggabelaufnahme umfasst vorzugsweise mehrere Lochreihenanordnungen. Jede Lochreihenanordnung weist mehrere übereinander angeordnete Löcher zum Befestigen der Zuggabel in unterschiedlichen Höhen auf. Insbesondere weist die einzelne Lochreihenanordnung zwei, drei, vier, fünf oder sechs übereinander angeordnete Löcher auf. Die Löcher dienen insbesondere zum Durchstecken von Bolzen, um so die Zuggabel an der Zuggabelaufnahme zu befestigen.

Insbesondere weist die Zuggabel zwei "Zinken" auf, die jeweils über eine Lochreihenanordnung an der Zuggabelaufnahme befestigt sind und die in Fahrtrichtung nach vorne zusammenlaufen und mit einem Zugauge oder einer Kugelkupplung ausgestattet sind.

Die einzelne Lochreihenanordnung der Zuggabelaufnahme ist vorzugsweise durch zwei parallele beabstandete Stahlbleche gebildet, wobei in jedem Blech die mehreren übereinander angeordneten Löcher ausgebildet sind.

Besonders bevorzugt ist die Zuggabel über schräggestellte Druckmittelzylinder, insbesondere Hydraulikzylinder, mit der Zuggabelaufnahme verbunden. Dementsprechend umfasst die Zuggabelaufnahme eine linke untere Lochreihenanordnung und eine rechte untere Lochreihenanordnung zum direkten Befestigen der Gabel an der Zuggabelaufnahme. Die Befestigung der Zuggabel über entsprechende Bolzen in den beiden unteren Lochreihenanordnungen fluchtet, so dass die Zuggabel um eine Querachse drehbar ist. Des Weiteren umfasst die Zuggabelaufnahme eine linke obere Lochreihenanordnung und eine rechte obere Lochreihenanordnung zum jeweiligen Befestigen des Druckmittelzylinders. Das obere Ende des jeweiligen Druckmittelzylinders ist in der zugehörigen oberen Lochreihenanordnung höhenverstellbar befestigt. Das untere Ende des jeweiligen Druckmittelzylinders ist an der Zuggabel befestigt.

Der Anhänger umfasst zumindest eine Multileistenanordnung. Die einzelne Multileistenanordnung erstreckt sich parallel zur Längsachse des Anhängers seitlich an der Mantelfläche des Tanks. Die Multileistenanordnung erstreckt sich dabei über eine hier als "Anordnungslänge" bezeichnete Länge.

Die Multileistenanordnung ist zum Befestigen, insbesondere Anschrauben, von Anbauteilen ausgebildet. Diese Anbauteile dienen erfindungsgemäß zum Befestigen eingeklappter Arme einer Schleppvorrichtung.

Die Anordnungslänge erstreckt sich über zumindest 50%, vorzugsweise zumindest 75% der Länge des Tanks. Die Länge des Tanks ist insbesondere durch die beiden Stirnwände definiert. Der Vorteil dieser sehr langen Multileistenanordnung ist, dass diese eine sehr flexible Positionierung von Anbauteilen ermöglicht. Bei der Fertigung des Anhängers muss aufgrund der sehr langen Multileistenanordnung nicht mehr berücksichtigt werden, welche Anbauteile und an welcher Position die Anbauteile anzubringen sind. Vielmehr kann ohne die Berücksichtigung vieler Varianten, jeder Anhänger mit der standardmäßig sehr langen Multileistenanordnung produziert werden.

Insbesondere ist vorgesehen, dass auf beiden Seiten des Tanks zumindest eine Multileistenanordnung verwendet wird. Besonders bevorzugt befinden sich auf beiden Seiten des Tanks jeweils zumindest zwei parallel angeordnete und beabstandete Multileistenanordnungen.

Die einzelne Multileistenanordnung umfasst bevorzugt mehrere fluchtende Leisten, die beabstandet zueinander angeordnet sind. Dabei entspricht die Summe der Länge der Leisten der "Anordnungslänge" der gesamten Multileistenanordnung. Insbesondere kann eine Multileistenanordnung entlang der Länge des Tanks zwei bis 30 einzelne Leisten umfassen. Durch Verteilen der Leisten über die gesamte Länge des Tanks ist eine sehr flexible Anordnung der Anbauteile an unterschiedlichsten Positionen möglich.

Die einzelne Multileistenanordnung erstreckt sich vorzugsweise über maximal 10 cm horizontal von der Mantelfläche weg. Diese Breite von bis zu 10 cm reicht aus, um insbesondere mit entsprechenden Durchgangsöffnungen in der Leiste die Anbauteile zu befestigen.

Weitere Einzelheiten, Vorteile und Merkmale der vorliegenden Erfindung ergeben sich aus nachfolgender Beschreibung eines Ausführungsbeispiels anhand der Zeichnungen. Es zeigen:

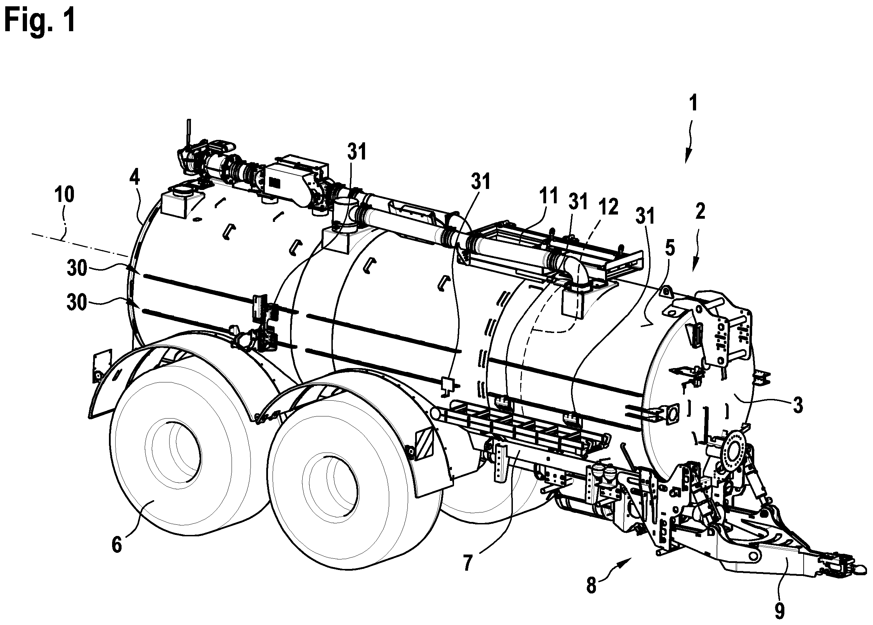

- Fig. 1: eine perspektivische Ansicht eines erfindungsgemäßen Anhängers gemäß einem Ausführungsbeispiel,
- Fig. 2: eine Detailansicht des erfindungsgemäßen Anhängers gemäß dem Ausführungsbeispiel,
- Fig. 3: eine schematische Ansicht der Trennwand in dem Tank des erfindungsgemäßen Anhängers gemäß dem Ausführungsbeispiel mit Deckeln zum Verschließen der Durchflussöffnungen,
- Fig. 4: eine Zuggabelaufnahme des erfindungsgemäßen Anhängers gemäß dem Ausführungsbeispiel,
- Fig. 5: die Zuggabelaufnahme mit Zuggabel des erfindungsgemäßen Anhängers gemäß dem Ausführungsbeispiel, und
- Fig. 6 und 7: ein Detail des erfindungsgemäßen Anhängers mit Multileisten gemäß dem Ausführungsbeispiel.

Im Folgenden wir ein Anhänger 1 zum Ausbringen von Flüssigkeit auf ein Feld im Detail beschrieben. Soweit nichts anderes erwähnt ist, wird dabei stets auf alle Figuren Bezug genommen.

Der Anhänger 1 umfasst einen Tank 2 aus Stahl mit einer vorderen Stirnwand 3 und einer hinteren Stirnwand 4, die über eine Mantelfläche 5 miteinander verbunden sind. Eine Längsachse 10 erstreckt sich parallel zur Fahrtrichtung durch die beiden Stirnwände 3, 4.

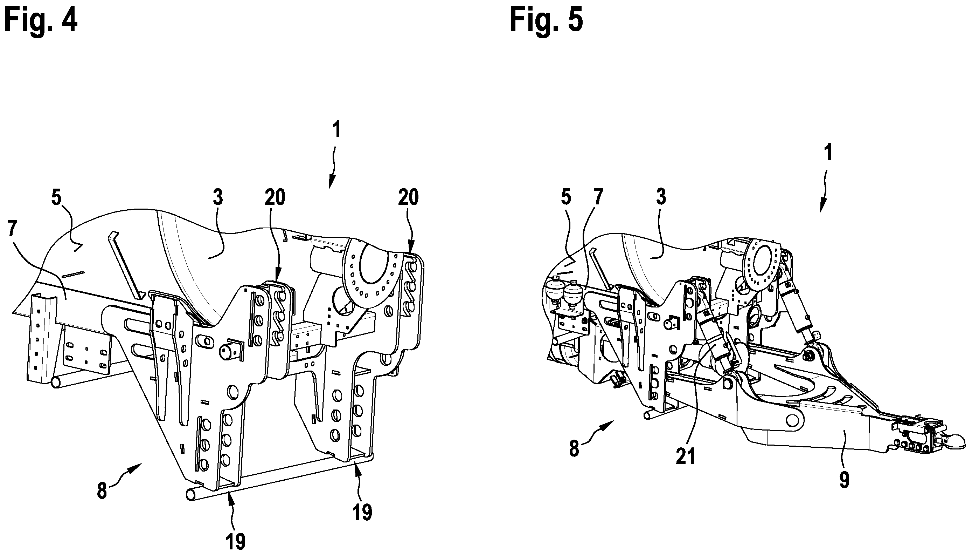

Der Tank 2 ist von einem Fahrwerk 6 getragen. Beispielsweise Fig. 4 verdeutlicht, dass unter dem Tank 2 zwei Längsträger 7 zur Aufnahme des Tanks 2 vorgesehen sind.

An der vorderen Seite des Anhängers 1 befindet sich eine Zuggabelaufnahme 8 mit einer daran höhenverstellbar angeordneten Zuggabel 9. Die Zuggabel 9 weist zwei "Zinken" auf, die nach vorne zusammenlaufen. Am vorderen Ende der Zuggabel 9 ist eine Kugelkupplung angeordnet.

An der Oberseite des Tanks 2 befindet sich ein Mannloch 11, über das in das Innere des Tanks 2 eingestiegen werden kann.

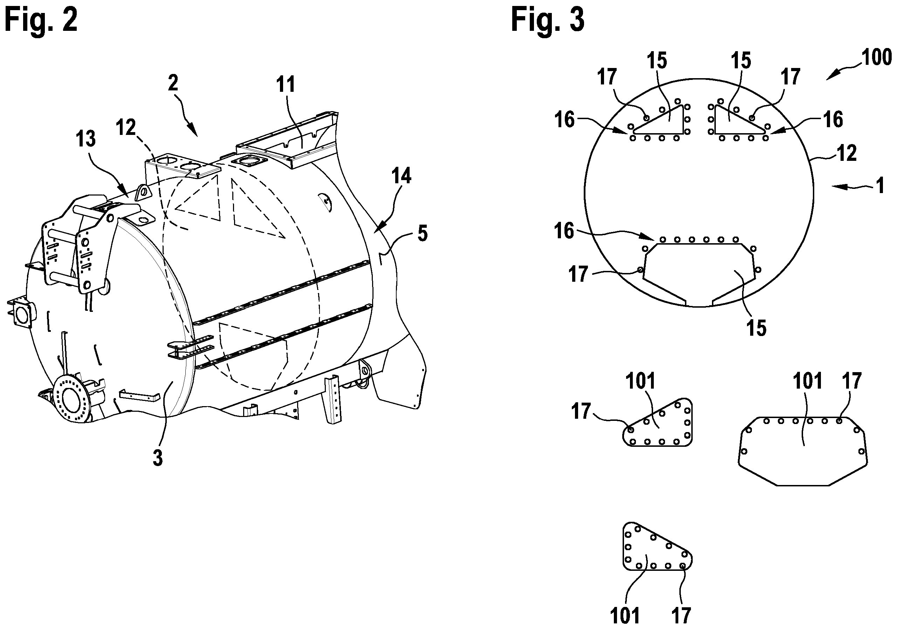

Fig. 2 verdeutlicht, dass im Inneren des Tanks 2 eine Trennwand 12 angeordnet ist. Die Trennwand 12 unterteilt den Tank 2 in ein vorderes Tankvolumen 13 und ein hinteres Tankvolumen 14. Das vordere Tankvolumen 13 ist kleiner als das hintere Tankvolumen 14.

Fig. 3 zeigt im Detail die Trennwand 12 mit drei Durchflussöffnungen 15. Gezeigt sind zwei Durchflussöffnungen 15 in der oberen Hälfte der Trennwand 12 und eine Durchflussöffnung in der unteren Hälfte der Trennwand 12.

Am Umfang der jeweiligen Durchflussöffnung 15 ist eine Befestigungsanordnung 16 ausgebildet. Die Befestigungsanordnung 16 weist mehrere Schraubenlöcher 17 auf.

Fig. 3 zeigt eine Anordnung 100, die den Tank 1 und die zugehörigen Deckel 101 zum Nachrüsten umfasst. Diese Deckel 101 passen jeweils zu einer der Durchflussöffnungen 15. Auch die Deckel 101 weisen am Umfang entsprechende Schraubenlöcher auf, so dass die Deckel 101 mit der zugehörigen Befestigungsanordnung 16 verschraubt werden können.

Die Deckel 101 sind in ihrer Größe derart ausgebildet, dass sie vollständig durch das Mannloch 11 in das Innere des Tanks 2 eingeführt werden können.

Fig. 4 und 5 zeigen, dass die Zuggabelaufnahme 8 zwei untere Lochreihenanordnungen 19 und zwei obere Lochreihenanordnungen 20 umfasst. Die Lochreihenanordnungen 19, 20 sind durch parallele beabstandete Stahlbleche gebildet. Jede Lochreihenanordnung 19, 20 umfasst mehrere, im gezeigten Beispiel drei, senkrecht übereinander angeordnete Löcher.

An den beiden unteren Lochreihenanordnungen 19 wird die Zuggabel 9 gemäß Fig. 5 mit Bolzen drehbeweglich befestigt. Die beiden oberen Lochreihenanordnungen 20 dienen zur höhenverstellbaren Halterung von Druckmittelzylindern 21. Die unteren Enden der Druckmittelzylinder 21 sind drehbeweglich mit der Zuggabel 9 verbunden; s. Fig. 5.

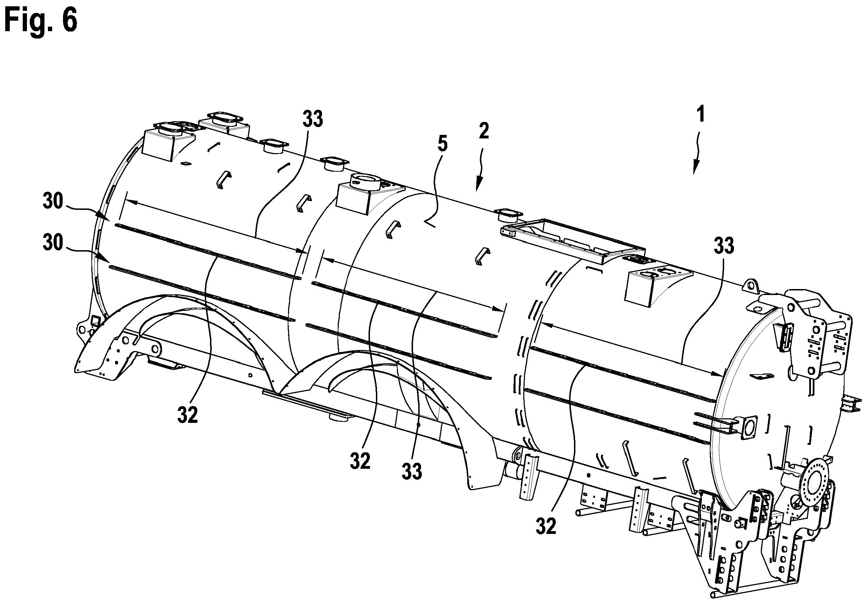

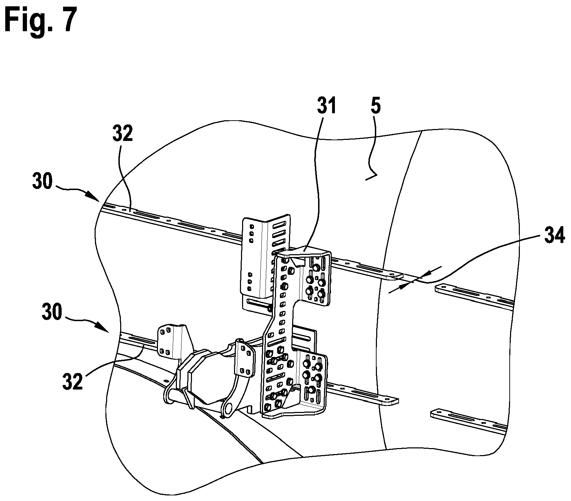

Fig. 6 und 7 zeigen eine Seite des Tanks 2 mit zwei Multileistenanordnungen 30. Auch an der gegenüberliegenden, nicht gezeigten Seite des Tanks 2 sind zwei dieser Multileistenordnungen 30 angeordnet.

Die Multileistenanordnungen 30 erstrecken sich jeweils parallel zur Längsachse 10 und befinden sich seitlich an der Mantelfläche 5 des Tanks 2. Fig. 7 verdeutlicht, dass an den Multileistenanordnungen 30 Anbauteile 31 an beliebiger Position befestigt werden können.

Die einzelne Multileistenanordnung 30 weist im gezeigten Beispiel drei fluchtende Leisten 32 auf. Jede Leiste 32 erstreckt sich über eine Leistenlänge 33. Die Summe der drei Leistenlängen 33 ergibt die im allgemeinen Teil der Beschreibung erwähnte "Anordnungslänge" der Multileistenanordnung 30.

Die einzelne Multileistenanordnung 30 bzw. die einzelne Leiste 32 erstreckt sich horizontal und senkrecht zur Längsachse 10 mit einer Leistenbreite 34. Entlang der Länge sind in den Leisten 32 diverse Durchgangsöffnungen ausgebildet, durch die Schrauben zum Befestigen der Anbauteile 31 gesetzt werden können.

### Bezugszeichenliste

- 1: Anhänger
- 2: Tank
- 3: vordere Stirnwand
- 4: hintere Stirnwand
- 5: Mantelfläche
- 6: Fahrwerk
- 7: Längsträger
- 8: Zuggabelaufnahme
- 9: Zuggabel
- 10: Längsachse
- 11: Mannloch
- 12: Trennwand
- 13: vorderes Tankvolumen
- 14: hinteres Tankvolumen
- 15: Durchflussöffnung
- 16: Befestigungsanordnung
- 17: Schraubenlöcher
- 19: untere Lochreihenanordnung
- 20: obere Lochreihenanordnung
- 21: Druckmittelzylinder
- 30: Multileistenanordnung
- 31: Anbauteil
- 32: Leiste
- 33: Leistenlänge
- 34: Leistenbreite
- 100: Anordnung
- 101: Deckel

## Patentansprüche

1. Anhänger (1) zur Beförderung von Flüssigkeiten, insbesondere Gülle, umfassend
• einen Tank (2) mit vorderer Stirnwand (3), hinterer Stirnwand (4) und einer die beiden Stirnwände (3, 4) verbindenden Mantelfläche (5),
• zumindest eine Multileistenanordnung (30), die sich parallel zu Längsachse (10) des Anhängers (1) über eine Anordnungslänge erstreckt und seitlich an der Mantelfläche (5) des Tanks (1) befestigt, insbesondere angeschweißt, ist,
• wobei die Multileistenanordnung (30) zum Befestigen, insbesondere Anschrauben, von Anbauteilen ausgebildet ist, wobei an der Multileistenanordnung (30) Anbauteile befestigt sind, wobei diese Anbauteile zum Befestigen eingeklappter Arme einer Schleppvorrichtung dienen,
• und wobei die Anordnungslänge zumindest 50%, vorzugsweise zumindest 75%, der Länge des Tanks (1) beträgt.

2. Anhänger nach Anspruch 1, wobei die Multileistenanordnung (30) mehrere fluchtende, beabstandete Leisten (32) umfasst, wobei die Summe der Längen (33) der Leisten (32) der Anordnungslänge entspricht.

3. Anhänger nach Anspruch 1 oder 2, wobei zwei parallele Multileistenanordnung (30) übereinander angeordnet sind, sodass das jeweilige Anbauteil gleichzeitig an beiden Multileistenanordnung (30) befestigbar ist.

4. Anhänger nach einem der Ansprüche 1 bis 3, wobei die Multileistenanordnung (30) sich mit einer Breite (34) von maximal 10 cm horizontal von der Mantelfläche (5) erstreckt und parallel zur Längsachse (10) eine Vielzahl an hintereinander angeordneter Durchgangsöffnungen zur Aufnahme von Schrauben umfasst.

5. Anhänger nach einem der Ansprüche 1 bis 4, umfassend eine Zuggabelaufnahme (8) am Tank (2) und eine an der Zuggabelaufnahme (8) in unterschiedlichen Höhen befestigbare Zuggabel (9).

6. Anhänger nach Anspruch 5, wobei die Zuggabelaufnahme (8) mehrere Lochreihenanordnungen (19, 20) mit jeweils mehreren übereinander angeordneten Löchern zum Befestigen der Zuggabel (9) in unterschiedlichen Höhen umfasst.

7. Anhänger nach Anspruch 6, wobei die Zuggabelaufnahme (8) eine linke untere Lochreihenanordnung (19) und eine rechte untere Lochreihenanordnung (19) zum Befestigen der Zuggabel (9) sowie eine linke obere Lochreihenanordnung (20) und eine rechte obere Lochreihenanordnung (20) zum jeweiligen Befestigen eines die Zuggabel (9) haltenden Druckmittelzylinders (21) umfasst.

## Claims

1. Trailer (1) for transporting liquids, in particular liquid manure, comprising
• a tank (2) with a front end wall (3), a rear end wall (4) and a lateral surface (5) connecting the two end walls (3, 4),
• at least one multibar arrangement (30) which extends parallel to the longitudinal axis (10) of the trailer (1) over an arrangement length and is fastened, in particular welded, laterally to the lateral surface (5) of the tank (1),
• wherein the multibar arrangement (30) is designed for fastening, in particular screwing, add-on parts, wherein add-on parts are fastened to the multibar arrangement (30), wherein these add-on parts serve for fastening folded-in arms of a towing device,
• and wherein the arrangement length is at least 50%, preferably at least 75%, of the length of the tank (1).

2. Trailer according to Claim 1, wherein the multibar arrangement (30) comprises a plurality of aligned, spaced-apart bars (32), wherein the sum of the lengths (33) of the bars (32) corresponds to the arrangement length.

3. Trailer according to Claim 1 or 2, wherein two parallel multibar arrangements (30) are arranged one above the other, such that the respective add-on part can be fastened simultaneously to both multibar arrangements (30).

4. Trailer according to one of Claims 1 to 3, wherein the multibar arrangement (30) extends horizontally with a width (34) of at most 10 cm from the lateral surface (5) and comprises, parallel to the longitudinal axis (10), a multiplicity of through-openings, arranged one behind the other, for receiving screws.

5. Trailer according to one of Claims 1 to 4, comprising a draw bar receptacle (8) on the tank (2) and a draw bar (9) which can be fastened to the draw bar receptacle (8) at different heights.

6. Trailer according to Claim 5, wherein the draw bar receptacle (8) comprises a plurality of row of hole arrangements (19, 20) with in each case a plurality of holes, arranged one above the other, for fastening the draw bar (9) at different heights.

7. Trailer according to Claim 6, wherein the draw bar receptacle (8) comprises a left-hand lower row of hole arrangement (19) and a right-hand lower row of hole arrangement (19) for fastening the draw bar (9), and a left-hand upper row of hole arrangement (20) and a right-hand upper row of hole arrangement (20) for the respective fastening of a pressure medium cylinder (21) which holds the draw bar (9).

## Revendications

1. Remorque (1) destinée au transport des liquides, en particulier de fumier, comprenant
• un réservoir (2) avec une paroi frontale avant (3), une paroi frontale arrière (4) et une surface latérale (5) reliant les deux parois frontales (3, 4),
• au moins un arrangement multibarre (30) qui s'étend parallèlement à l'axe longitudinal (10) de la remorque (1) sur une longueur d'arrangement et qui est fixé, en particulier soudé, latéralement à la surface latérale (5) du réservoir (1),
• dans lequel l'arrangement multibarre (30) est conçu pour la fixation, en particulier le vissage, de pièces rapportées, dans lequel des pièces rapportées sont fixées à l'arrangement multibarre (30), dans lequel ces pièces rapportées servent à la fixation de bras repliés d'un dispositif de remorquage,
• et dans lequel la longueur d'arrangement représente au moins 50 %, de préférence au moins 75 %, de la longueur du réservoir (1).

2. Remorque selon la revendication 1, dans lequel l'arrangement multibarre (30) comprend plusieurs barres (32) alignées et espacées les unes des autres, dans lequel la somme des longueurs (33) des barres (32) correspond à la longueur d'arrangement.

3. Remorque selon la revendication 1 ou 2, dans lequel deux arrangements multibarres (30) parallèles sont disposés l'un au-dessus de l'autre de telle sorte que la pièce rapportée respective puisse être fixée simultanément aux deux arrangements multibarres (30).

4. Remorque selon l'une quelconque des revendications 1 à 3, dans lequel l'arrangement multibarre (30) s'étend horizontalement avec une largeur (34) d'au plus 10 cm à partir de la surface latérale (5) et comprend, parallèlement à l'axe longitudinal (10), une pluralité d'ouvertures de passage disposées les unes derrière les autres pour recevoir des vis.

5. Remorque selon l'une quelconque des revendications 1 à 4, comprenant un logement de barre de traction (8) sur le réservoir (2) et une barre de traction (9) qui peut être fixée au logement de barre de traction (8) à différentes hauteurs.

6. Remorque selon la revendication 5, dans lequel le logement de barre de traction (8) comprend plusieurs rangées d'arrangements de trous (19, 20) avec à chaque fois plusieurs trous disposés les uns au-dessus des autres pour la fixation de la barre de traction (9) à différentes hauteurs.

7. Remorque selon la revendication 6, dans lequel le logement de barre de traction (8) comprend une rangée inférieure gauche d'arrangements de trous (19) et une rangée inférieure droite d'arrangements de trous (19) pour la fixation de la barre de traction (9) et une rangée supérieure gauche d'arrangements de trous (20) et une rangée supérieure droite d'arrangements de trous (20) pour la fixation respective d'un cylindre de fluide sous pression (21) maintenant la barre de traction (9).
